# EUROPEAN PATENT APPLICATION

(11) **EP 4 501 508 A1**
(43) Date of publication of application: **05.02.2025**
(21) Application number: 23778819.5
(22) Date of filing: 31.01.2023
(51) Int. Cl.: B23G 9/00, B23G 1/46, B23G 1/48

(54) **THREAD CLEANING MODULE AND THREAD CLEANING UNIT**

(30) Priority: 29.03.2022 JP 2022053181
(71) Applicant: G-Tekt Corporation, Saitama-city, Saitama 330-0854 (JP)
(72) Inventor: TAKAHASHI, Makoto, Koka-shi, Shiga 528-0212 (JP); YAMAMOTO, Yusuke, Koka-shi, Shiga 528-0212 (JP); NAGAMINE, Kouji, Koka-shi, Shiga 528-0212 (JP)
(74) Representative: Samson & Partner Patentanwälte mbB
(86) International application number: PCT/JP2023/003038
(87) International publication number: WO 2023/188782

(57) **Abstract**

A screw thread cleaning module includes a rod-shaped assembly (3) including a driving motor (2) including a horizontal rotation shaft (14), a shaft member (16) coupled to the rotation shaft (14) via an Oldham coupling, and a tap (5) attached to the distal end portion of the shaft member (16). The screw thread cleaning module includes a support body (4) configured to support the rod-shaped assembly (3) such that it can freely move in the axial direction of the rotation shaft (14). The screw thread cleaning module includes a centering posture control means (a first contact member 56 and a second contact member 57), supported by the support body (4) such that the centering posture control means is capable of coming into contact with and separating from the outer peripheral surface of the shaft member (16), and regulating movement of the shaft member (16) in a direction orthogonal to the axial direction of the shaft member (16). The screw thread cleaning module includes a driving control device configured to rotate the rotation shaft (14) in a reverse direction, thereby actuating the Oldham coupling and performing centering between the tap (5) and the threaded hole of the workpiece. It is possible to provide a screw thread cleaning module that is not restricted by the direction in which the threaded hole is directed and can perform screw thread cleaning from the horizontal direction.

## Description

### Technical Field

The present invention relates to a screw thread cleaning module and a screw thread cleaning unit, which performs screw thread cleaning by screwing a tap into a threaded hole.

### Background Art

A vehicle body part made of a steel plate and used in an automobile is formed into a predetermined shape by combining plate materials. Brackets, nuts, and the like used to attach accessory parts are welded to attach the vehicle body part. If a welding work such as MAG welding is performed in a process of manufacturing the vehicle body part, a spatter scattered from a welded portion may adhere to the threaded hole of a part or the threaded hole of a nut. If the spatter adheres to the threaded hole or the nut, it may be impossible to screw a bolt into it. For this reason, if the spatter adheres to the threaded hole or the nut, an operator manually screw a tap into the threaded hole or the nut to clean the threaded hole or the nut by the tap, thereby removing the spatter.

Patent literatures 1 and 2 each disclose a device that performs a screw thread cleaning work of removing a spatter by screwing a tap into a threaded hole. The device shown in patent literature 1 has a tap attached to the distal end portion of a spindle that is driven and rotated by a motor, and is used in a state in which the tap is directed downward. In this device, an Oldham coupling is provided between the spindle and the motor such that the tap is screwed along the threaded hole.

The device described in patent literature 2 includes a workpiece holding table configured to swingably hold a workpiece by a spring member and move it in an upward-downward direction, a tap arranged above the workpiece holding table and directed downward, and the like. The tap is driven and rotated by a motor. In this device, the workpiece rises toward the tap, the rotating tap is inserted into a threaded hole, and a screw thread cleaning work is thus performed.

### Related Art Literature

### Patent Literature

Patent Literature 1: Japanese Utility Model Laid-Open No. 6-53027
Patent Literature 2: Japanese Patent No. 5150189

### Disclosure of Invention

### Problem to be Solved by the Invention

If the screw thread cleaning work is manually performed by an operator, it is not efficient because the work time is long, and the labor cost increases. Such disadvantages can be solved to some extent by using the device that drives the tap by the motor and screws it into the threaded hole, as shown in patent literature 1 or 2.

However, if the workpiece is a large vehicle body part of an automobile, the device shown in patent literature 1 or 2 cannot be used. This is because the device shown in patent literature 1 or 2 screws the tap from above into the threaded hole directed in the upward-downward direction. Many large vehicle body parts of an automobile have shapes extending in the horizontal direction in a vehicle-mounted state. In a threaded hole or a nut provided in a vehicle body part of this type, the threaded hole is often directed in the upward-downward direction in the vehicle-mounted state. If the screw thread cleaning work is performed for the threaded hole or the nut of such a large vehicle body part using the device shown in patent literature 1 or 2, the vehicle body part that is a workpiece largely extends in the horizontal direction, and the occupied floor area of the device is large.

The occupied floor area can be reduced if the screw thread cleaning work can be performed in a state in which the large vehicle body part is held upright such that the threaded hole or the nut is directed in the horizontal direction. Since the device shown in patent literature 1 is attached to an articulated robot and used, the tap can take a posture directed in the horizontal direction. In this posture, however, the spindle tilts downward with respect to the Oldham coupling as a starting point, and it is therefore difficult to correctly screw the tap into the threaded hole or the nut. If the device shown in patent literature 2 is used in a posture held upright, the spring member that supports the workpiece is unnecessarily deflected and cannot correctly hold the workpiece. For this reason, the device shown in patent literature 1 or 2 cannot perform the screw thread cleaning work for a threaded hole or a nut directed in the horizontal direction.

The device shown in patent literature 1 and the device shown in patent literature 2 have the following problems in addition to the above-described problems.
• The device shown in patent literature 1 and the device shown in patent literature 2 each cannot perform screw thread cleaning from both the obverse surface side and the reverse surface side of a workpiece.
• The device shown in patent literature 1 and the device shown in patent literature 2 each cannot perform screw thread cleaning simultaneously for multiple points. Since the device shown in patent literature 1 makes a robot to hold the tap, and the device shown in patent literature 2 includes no swing mechanism in the screw thread cleaning mechanism, screw thread cleaning can be performed only for one point.
• The device shown in patent literature 1 and the device shown in patent literature 2 each perform the screw thread cleaning work in a state in which a workpiece is fallen in the horizontal direction. If the workpiece is fallen in the horizontal direction, the spatter may drop on the workpiece, or the spatter may splash on a jig and the like under the workpiece. This undesirably requires to make the frequency of maintenance high.

It is an object of the present invention to provide a screw thread cleaning module that is not restricted by a direction in which a threaded hole is directed and can perform screw thread cleaning from both the obverse and reverse surfaces of a workpiece or simultaneously for multiple points, or perform screw thread cleaning from the horizontal direction while holding a workpiece upright, and provide a screw thread cleaning unit capable of efficiently performing a screw thread cleaning work using the screw thread cleaning module.

### Means of Solution to the Problem

In order to achieve the above-described object, according to the present invention, there is provided a screw thread cleaning module comprising a rod-shaped assembly including a driving motor including a rotation shaft having capable of rotating in a forward direction and a reverse direction in a horizontal posture, a shaft member coupled to the rotation shaft via an Oldham coupling, and a tap detachably attached to a distal end portion of the shaft member and capable of being screwed into a threaded hole of a workpiece when the rotation shaft rotates in the forward direction, a support body configured to support the rod-shaped assembly such that the rod-shaped assembly can freely move in a horizontal axial direction of the rotation shaft, centering posture control means supported by the support body such that the centering posture control means is capable of coming into contact with and separating from an outer peripheral surface of the shaft member of the rod-shaped assembly, and regulating movement of the shaft member in a direction orthogonal to an axial direction of the shaft member when pressed against the outer peripheral surface of the shaft member, and a driving control device configured to rotate the rotation shaft such that a rotation direction is reverse to that of the forward rotation, thereby actuating the Oldham coupling and performing centering between the tap and the threaded hole of the workpiece.

According to the present invention, there is provided a screw thread cleaning unit comprising a screw thread cleaning module support unit configured to support the screw thread cleaning module such that an axis of a rotation shaft is horizontal, and a workpiece support unit configured to support a workpiece such that an opening direction of a threaded hole is a horizontal direction, wherein the screw thread cleaning module support unit may include mounting seats to each of which a support body of the screw thread cleaning module is attached at the same position in an axial direction of the rotation shaft and at a plurality of positions in a direction orthogonal to the axial direction of the rotation shaft, and may comprise a third driving device configured to move the plurality of mounting seats in the axial direction of the rotation shaft.

### Effect of the Invention

According to the present invention, it is possible to provide a screw thread cleaning module that is not restricted by the opening direction of a threaded hole or the attachment angle of a nut and can perform screw thread cleaning from both the obverse and reverse surfaces of a workpiece or simultaneously for multiple points, or perform screw thread cleaning from the horizontal direction while holding a workpiece upright. Also, according to the present invention, it is possible to provide a screw thread cleaning unit that is not restricted by the opening direction of a threaded hole or the attachment angle of a nut and is not restricted by the position of a threaded hole, and can efficiently perform a screw thread cleaning work.

### Brief Description of Drawings

Fig. 1 is a perspective view of a screw thread cleaning module according to the present invention;
Fig. 2 is a perspective view of the screw thread cleaning module;
Fig. 3 is a sectional view of a part of the screw thread cleaning module;
Fig. 4 is a sectional view showing a state in which a tap has moved close to the nut portion of a workpiece;
Fig. 5 is a sectional view showing a part of the screw thread cleaning module;
Fig. 6 is a block diagram showing the configuration of the control system of the screw thread cleaning module;
Fig. 7 is a perspective view showing a centering control means;
Fig. 8 is a sectional view of a main shaft and a contact member;
Fig. 9 is a sectional view of a main shaft and a contact member;
Fig. 10A is a schematic view for explaining the configuration of contact pieces;
Fig. 10B is a schematic view for explaining the configuration of contact pieces;
Fig. 10C is a schematic view for explaining the configuration of contact pieces;
Fig. 11 is an exploded perspective view of a tap holder;
Fig. 12A is a schematic view for explaining the use form of the screw thread cleaning module;
Fig. 12B is a schematic view for explaining the use form of the screw thread cleaning module;
Fig. 12C is a schematic view for explaining the use form of the screw thread cleaning module;
Fig. 13A is a schematic view for explaining the operation of the screw thread cleaning module;
Fig. 13B is a schematic view for explaining the operation of the screw thread cleaning module;
Fig. 13C is a schematic view for explaining the operation of the screw thread cleaning module;
Fig. 14A is a schematic view for explaining the operation of the screw thread cleaning module;
Fig. 14B is a schematic view for explaining the operation of the screw thread cleaning module;
Fig. 14C is a schematic view for explaining the operation of the screw thread cleaning module;
Fig. 15 is a side view of a screw thread cleaning unit;
Fig. 16 is a side view of a screw thread cleaning unit;
Fig. 17 is a perspective view of a screw thread cleaning module support unit;
Fig. 18 is a perspective view of a screw thread cleaning module support unit;
Fig. 19 is a perspective view showing a part of the screw thread cleaning module support unit on which a plurality of screw thread cleaning modules are mounted;
Fig. 20 is a perspective view of a workpiece support unit;
Fig. 21 is a perspective view of a workpiece support unit; and
Fig. 22 is a perspective view of a workpiece holding device.

### Best Mode for Carrying Out the Invention

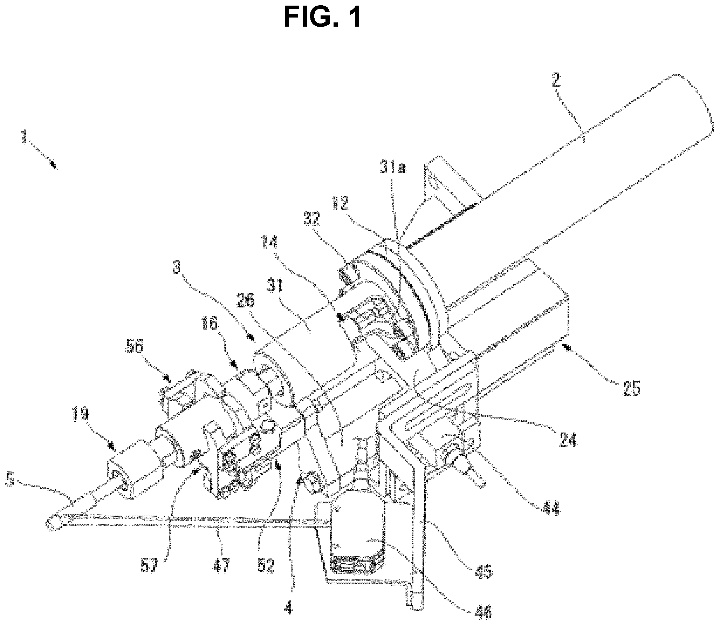

An embodiment of a screw thread cleaning module according to the present invention will now be described in detail with reference to Figs. 1 to 14.

### (Description of Screw thread cleaning Module)

A screw thread cleaning module 1 shown in Fig. 1 includes a rod-shaped assembly 3 including a driving motor 2 drawn on the uppermost side in Fig. 1, and a support body 4 that supports the rod-shaped assembly 3 such that it can move in the axial direction.

The driving motor 2 is located at one end portion of the rod-shaped assembly 3 in the axial direction. A tap 5 used to perform a screw thread cleaning operation is provided at the other end portion of the rod-shaped assembly 3 in the axial direction. When indicating a direction in an explanation of each part of the screw thread cleaning module 1 hereinafter, for the descriptive convenience, a direction in which the driving motor 2 of the rod-shaped assembly 3 is located is defined as the rear of the screw thread cleaning module 1, and a direction in which the tap 5 is located is defined as the front of the screw thread cleaning module 1.

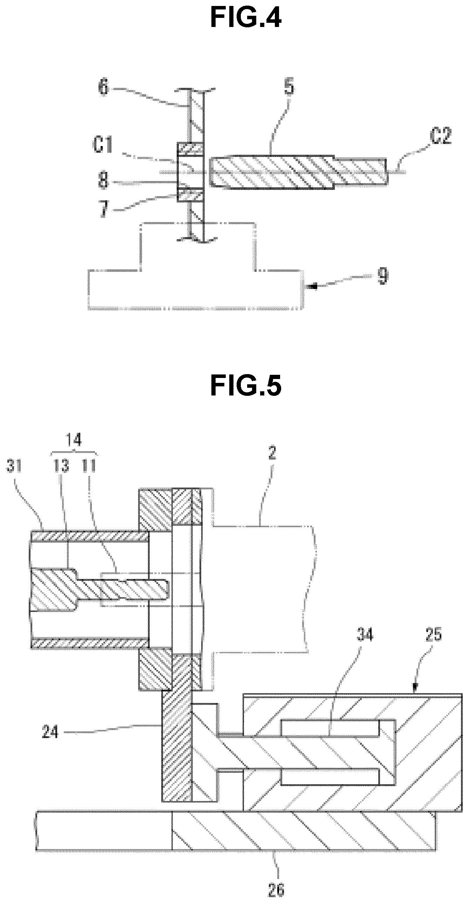

The tap 5 is screwed into a threaded hole 8 of a nut 7 provided in a workpiece 6 (see Fig. 4), thereby removing a spatter adhered to the threaded hole 8. Note that although not illustrated, a threaded hole may directly be formed in the workpiece 6, and a screw thread cleaning work is executed even for such a threaded hole by the tap 5.

As the workpiece 6, for example, a vehicle body part of an automobile can be used. In this embodiment, an example in which the screw thread cleaning work is performed for the threaded hole 8 directed in the horizontal direction will be described. The workpiece 6 is fixed on a workpiece support table 9 in a state in which the threaded hole 8 is directed in the horizontal direction.

### (Explanation of Rod-Shaped Assembly)

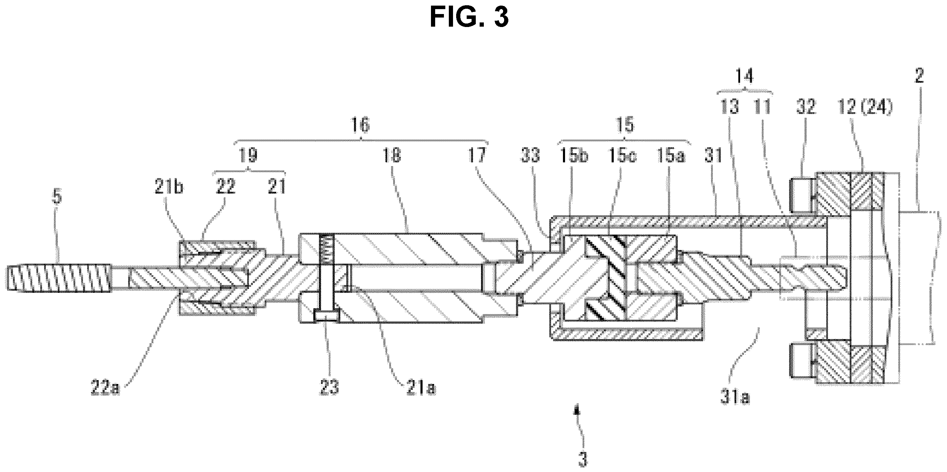

The driving motor 2 includes an output shaft 11 projecting from one end portion (front end portion), as shown in Fig. 3, and can rotate the output shaft 11 in the forward or reverse direction. The front end portion of the driving motor 2 extends through an annular flange portion 12 of the support body 4 to be described later and is fixed, in this state, to the annular flange portion 12 by a plurality of fixing bolts (not shown). An extended shaft 13 is coupled to the front end portion of the output shaft 11 so as to be integrally rotatable. In this embodiment, the output shaft 11 and the extended shaft 13 from a rotation shaft 14 of the driving motor 2.

As shown in Fig. 3, the rod-shaped assembly 3 is formed by the above-described driving motor 2, a shaft member 16 coupled to the extended shaft 13 via an Oldham coupling 15, the tap 5 detachably attached to the front end portion of the shaft member 16, and the like.

The Oldham coupling 15 transmits the rotation of the rotation shaft 14 to the shaft member 16 in a state in which the shaft member 16 to be described later is permitted to decenter or tilt with respect to the rotation shaft 14. The Oldham coupling 15 includes a driving block 15a, a driven block 15b, and an intermediate block 15c. The driving block 15a is attached to the extended shaft 13. The driven block 15b is formed integrally with a connecting shaft 17 that forms the rear end of the shaft member 16. The intermediate block 15c is provided between the driving block 15a and the driven block 15b and couples these members in a state in which the driven block 15b is permitted to decenter or tilt with respect to the driving block 15.

The shaft member 16 includes the connecting shaft 17 formed integrally with the driven block 15b of the Oldham coupling 15, a cylindrical main shaft 18 fixed to the front end portion of the connecting shaft 17, a tap holder 19 detachably attached to the front end portion of the main shaft 18, and the like. The main shaft 18 forms "a cylindrical portion of a shaft member" in the present invention.

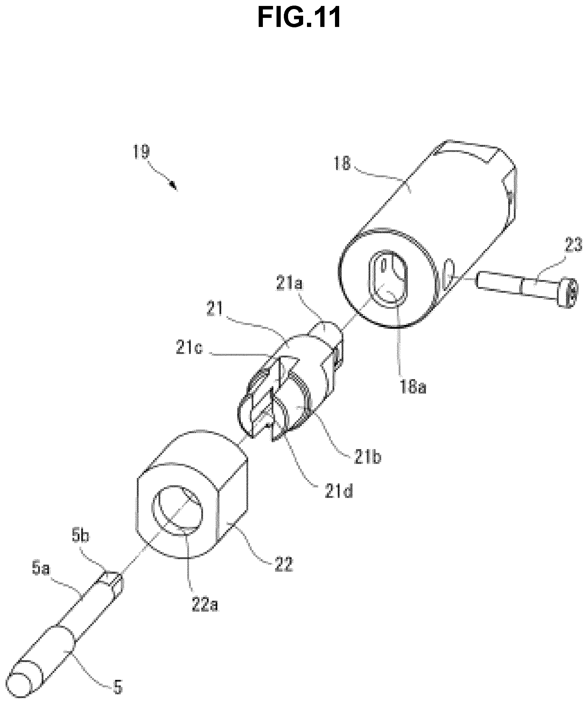

The tap holder 19 includes a support shaft 21 detachably attached to the main shaft 18, and a lock nut 22 threadably attached to the support shaft 21. A rear end portion 21a of the support shaft 21 is formed to be fitted in a hole 18a formed in the front end portion of the main shaft 18, as shown in Fig. 11. The opening of the hole 18a has an elongated circular shape such that a rotation force is transmitted from the main shaft 18 to the support shaft 21. When the rear end portion 21a of the support shaft 21 is fitted in the hole 18a, the support shaft 21 is located on the same axis as the main shaft 18.

A lock bolt 23 extends through the fitting portion between the support shaft 21 and the main shaft 18 in a crossing state. The lock bolt 23 is threadably attached to the main shaft 18. When the lock bolt 23 is detached from the main shaft 18, the tap holder 19 can be attached/detached to/from the main shaft 18. If the tap holder 19 can be attached/detached to/from the main shaft 18 in this way, the operation of the screw thread cleaning module 1 is temporarily stopped in a case of breakage of the tap 5 and, in this state, the tap 5 can be exchanged with a reserved one together with the tap holder 19. Hence, tap exchange can be performed without lowering the rate of line operation.

As shown in Fig. 11, a front end portion 21b of the support shaft 21 of the tap holder 19 is formed into a bifurcated shape such that the tap 5 can be clamped in the shaft core portion. The bifurcated portions facing each other are formed by a pair of flat surfaces 21c parallel to each other, and a pair of concave surfaces 21d. The concave surfaces 21d are formed into a shape between which a columnar shaft portion 5a of the tap 5 is fitted. When the shaft portion 5a is fitted between the concave surfaces 21d, the tap 5 is located on the same axis as the support shaft 21.

At the rear end portion of the tap 5, an engaging portion 5b having a quadrangular prism shape is provided. The engaging portion 5b has a size fitted between the pair of flat surfaces 21c. When the engaging portion 5b is fitted between the pair of flat surfaces 21c, the rotation of the support shaft 21 is transmitted to the tap 5.

The front end portion 21b of the support shaft 21 is formed into a tapered shape gradually thinning toward the distal end. As shown in Fig. 3, the lock nut 22 includes a tapered surface 22a fitted on the front end portion 21b of the support shaft 21, and is threadably attached to the outer peripheral portion of the support shaft 21. When the lock nut 22 is screwed on the support shaft 21, the front end portion 21b of the support shaft 21 is pressed inward in the radial direction and elastically deformed in a direction in which the interval between the bifurcated portions decreases. For this reason, the tap 5 is held in a state in which it is clamped in the front end portion 21b of the support shaft 21. On the other hand, when the lock nut 22 is loosened, the force of pressing the tap 5 disappears, and the tap 5 can be pulled out of the support shaft 21. Since the front end portion of the shaft member 16 is formed by the tap holder 19, the tap 5 is detachably attached to the front end portion of the shaft member 16.

A conventional general tap holder uses a screw part or a ball material/elastic member, and has a complex structure. As compared to the conventional tap holder, the tap holder 19 according to this embodiment is formed by only two parts including the support shaft 21 whose distal end portion is formed into a bifurcated shape, and the lock nut 22, and has a simple structure while implementing a function of holding the tap 5. Hence, since the number of parts used is small, as described above, and a simple configuration for clamping and holding the tap 5 between the bifurcated portions is employed, the tap holder 19 according to this embodiment is formed lightweight and compact.

Since the tap holder 19 is employed, the screw thread cleaning module 1 according to this embodiment can be formed small as a whole.

### (Explanation of Support Body and First Driving Device)

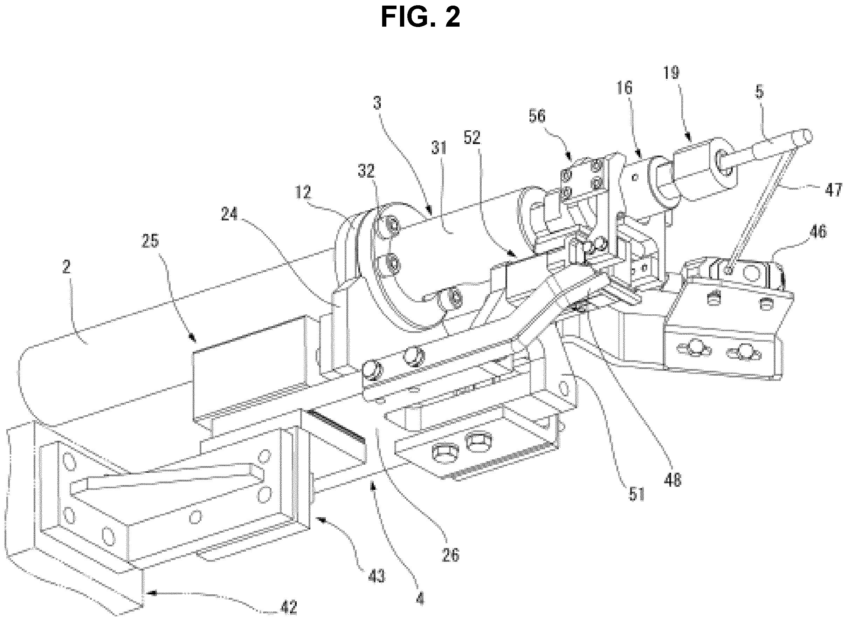

The support body 4 according to this embodiment employs a configuration in which a first support plate 24 (see Figs. 1 and 2) including the annular flange portion 12 to which the above-described driving motor 2 is attached is supported via a first driving device 25 to be described later such that it can move in the axial direction of the rotation shaft 14. The support body 4 is formed by the first support plate 24, the first driving device 25, a second support plate 26 that supports the first driving device 25, and the like.

The first support plate 24 is formed to extend in a direction orthogonal to the axial direction of the rotation shaft 14 including the annular flange portion 12. On the front surface of the annular flange portion 12, a cylindrical tube body 31 extending frontward from there is fixed by a plurality of fixing bolts 32. As shown in Fig. 3, the tube body 31 covers the extended shaft 13, the Oldham coupling 15, and a part of the connecting shaft 17 on the rear side. At the front end portion of the tube body 31, an annular lip 33 extending inward in the radial direction is formed. The hole diameter at the center of the lip 33 is larger than the outer diameter of the connecting shaft 17 to permit a play of the connecting shaft 17, and is smaller than the outer diameter of the driven block 15b of the Oldham coupling 15 to regulate the movement of the driven block 15b to the front side.

A hole 31a is formed in the rear portion of the tube body 31, as shown in Figs. 1 and 3. The hole 31a is a hole used to pass the extended shaft 13 when exchanging the extended shaft 13 located inside the tube body 31.

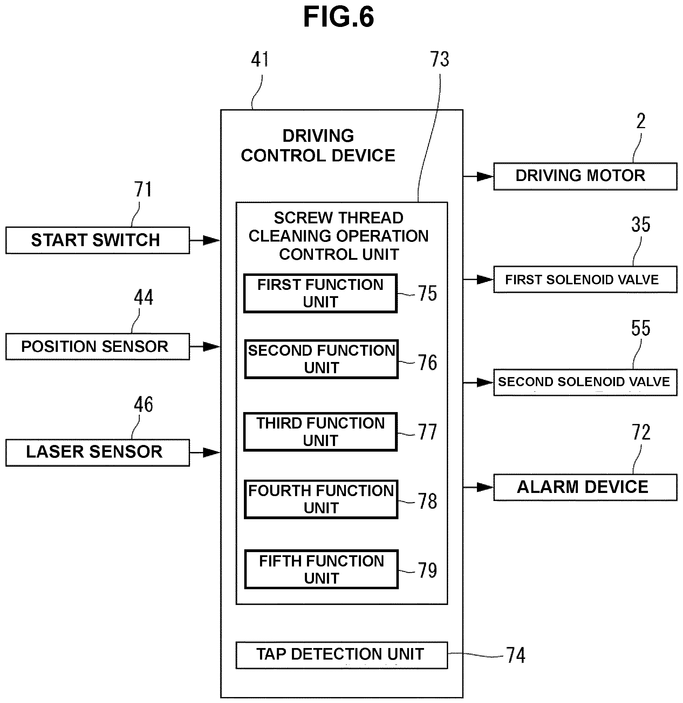

As shown in Fig. 5, the first driving device 25 is formed by an air cylinder including a piston rod 34. The first support plate 24 extends in a direction orthogonal to the axial direction of the rotation shaft 14, and is attached to the piston rod 34 of the first driving device 25. The first driving device 25 is configured such that the piston rod 34 reciprocally moves in a direction parallel to the axial direction of the above-described rotation shaft 14. The first driving device 25 is coupled to an air supply device (not shown) via a first solenoid valve 35 (see Fig. 6), and operates when air is supplied from the first solenoid valve 35. The operation of the first solenoid valve 35 is controlled by a driving control device 41 to be described later. When the first driving device 25 operates, the rod-shaped assembly 3 moves in the front-back direction with respect to the support body 4.

The second support plate 26 extends in the front-back direction along the rod-shaped assembly 3.

To the rear end portion of the second support plate 26, the first driving device 25 is attached, and an attachment bracket 43 used to assemble the screw thread cleaning module 1 to, for example, a positioning robot 42 (see Fig. 2) is also attached. As the positioning robot 42, an articulated robot or a robot that supports the screw thread cleaning module 1 such that it can translates can be used.

As shown in Fig. 1, a position sensor 44 configured to detect the position of the rod-shaped assembly 3 in the front-back direction is provided on one side portion of the second support plate 26. The position sensor 44 is a so-called proximity sensor. The position sensor 44 magnetically detects the first support plate 24 that is driven and moved forward by the first driving device 25, and sends a detection signal to the driving control device 41. When the tap 5 is screwed into the nut 7 in a screw thread cleaning operation to be described later, and screw thread cleaning is ended, the first support plate 24 is detected by the position sensor 44.

Also, a laser sensor 46 is attached to one side portion of the second support plate 26 via an attachment stay 45. The laser sensor 46 irradiates the tap 5 with a laser beam 47 and sends detection data capable of specifying the presence/absence of reflected light to the driving control device 41. If reflected light does not reach the laser sensor 46, the driving control device 41 determines that the tap 5 is broken, and executes a predetermined alarming operation.

An air blow pipe 48 is attached to the other end portion of the second support plate 26, as shown in Fig. 2. The air blow pipe 48 is coupled to an air supply device (not shown) via an air pipe (not shown) and ejects compressed air to the tap 5. When the compressed air is blown to the tap 5, dust such as a spatter removed at the time of the screw thread cleaning operation is blown off.

### (Explanation of Centering Posture Control Means)

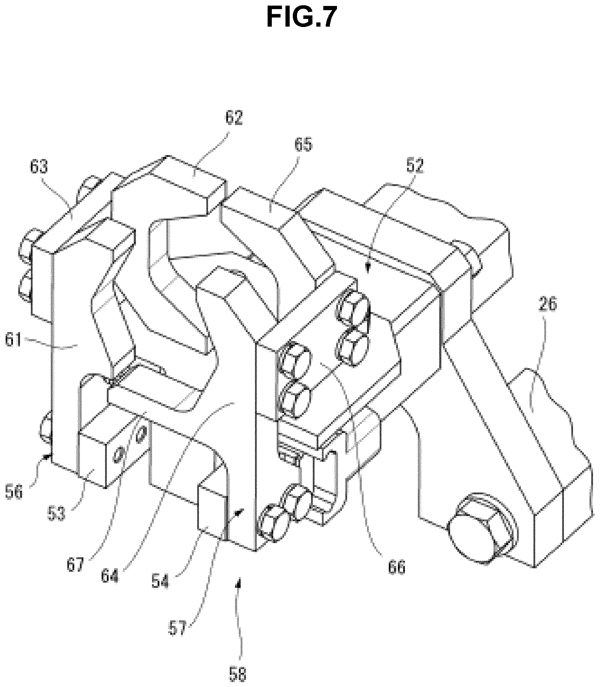

To the front end portion of the second support plate 26, a second driving device 52 is attached via an attachment bracket 51, as shown in Figs. 2 and 7. Although not illustrated in detail, the second driving device 52 is formed by an air cylinder and has, at the front end portion, a pair of actuators 53 and 54 (see Fig. 7) projecting frontward. The pair of actuators 53 and 54 are arranged in a direction orthogonal to the axial direction of the rotation shaft 14.

The second driving device 52 is coupled to an air supply device (not shown) via a second solenoid valve 55 (see Fig. 6), and operates when air is supplied from the second solenoid valve 55. The operation of the second solenoid valve 55 is controlled by the driving control device 41 to be described later. When the second driving device 52 operates, the pair of actuators 53 and 54 move in directions in which these move close to each other and in directions in which these move away from each other.

Of the pair of actuators 53 and 54, a first contact member 56 is attached to the first actuator 53 located on the left side in Fig. 7, and a second contact member 57 is attached to the second actuator 54 located on the right side in Fig. 7. As will be described later in detail, the first contact member 56 and the second contact member 57 are located at positions to sandwich the main shaft 18 from both sides in the radial direction. When driven by the second driving device 52, the first contact member 56 and the second contact member 57 move toward the main shaft 18 and come into contact with the outer peripheral surface of the main shaft 18. For this reason, the first contact member 56 and the second contact member 57 according to this embodiment are supported by the support body 4 via the second driving device 52 such that the centering posture control means is capable of coming into contact with and separating from the main shaft 18.

The first contact member 56 and the second contact member 57 form a centering posture control means 58 that is pressed against the outer peripheral surface of the main shaft 18 and thus regulates movement in the direction orthogonal to the axial direction of the main shaft 18.

Although not illustrated in detail, the second solenoid valve 55 coupled to the second driving device 52 is an exhaust center three-position solenoid valve. When air is supplied from the second solenoid valve 55 to the second driving device 52, the first contact member 56 and the second contact member 57 operate to move close to each other or away from each other. Also, when the second solenoid valve 55 is set in an OFF state in a state in which the first contact member 56 and the second contact member 57 press the main shaft 18, air is discharged from the second driving device 52 via the second solenoid valve 55, and the pressing force of the first contact member 56 and the second contact member 57 pressing the main shaft 18 disappears. That is, the second driving device 52 switches between a state in which the first contact member 56 and the second contact member 57 contact the main shaft 18 and press the main shaft 18 and a state in which the pressing force disappears. In a state in which the pressing force of the first contact member 56 and the second contact member 57 pressing the main shaft 18 disappears, the main shaft 18 can push away the first contact member 56 and the second contact member 57 and move in the direction orthogonal to the axial direction.

As shown in Fig. 7, the first contact member 56 includes a plurality of contact pieces 61 and 62 arranged at a predetermined interval in the axial direction (a direction parallel to a direction from the lower left side to the upper right side in Fig. 7) of the rotation shaft 14. The first contact member 56 according to this embodiment includes the two contact pieces 61 and 62. More specifically, the first contact member 56 includes the front-side contact piece 61 attached to the first actuator 53 of the pair of actuators 53 and 54 of the second driving device 52, and the rear-side contact piece 62 coupled to the front-side contact piece 61 via a connecting member 63.

The second contact member 57 includes a plurality of contact pieces 64 and 65 arranged at a predetermined interval in the axial direction of the rotation shaft 14. The second contact member 57 according to this embodiment includes the two contact pieces 64 and 65. More specifically, the second contact member 57 includes the front-side contact piece 64 attached to the second actuator 54 of the pair of actuators 53 and 54 of the second driving device 52, and the rear-side contact piece 65 coupled to the front-side contact piece 64 via a connecting member 66.

The reason why the front-side contact pieces 61 and 64 and the rear-side contact pieces 62 and 65 are provided is that support of the main shaft 18 is stabilized. With only the rear-side contact pieces 62 and 65, when the screw thread cleaning module 1 with a long shape is arranged to extend in the horizontal direction, it hangs down by its own weight with respect to the rear-side contact pieces 62 and 65 as a fulcrum. Hence, the front-side contact pieces 61 and 64 and the rear-side contact pieces 62 and 65 are arranged with an interval in the axial direction. The front-side contact piece 61 and the rear-side contact piece 62 are coupled by the connecting member 63. The front-side contact piece 64 and the rear-side contact piece 65 are coupled by the connecting member 66.

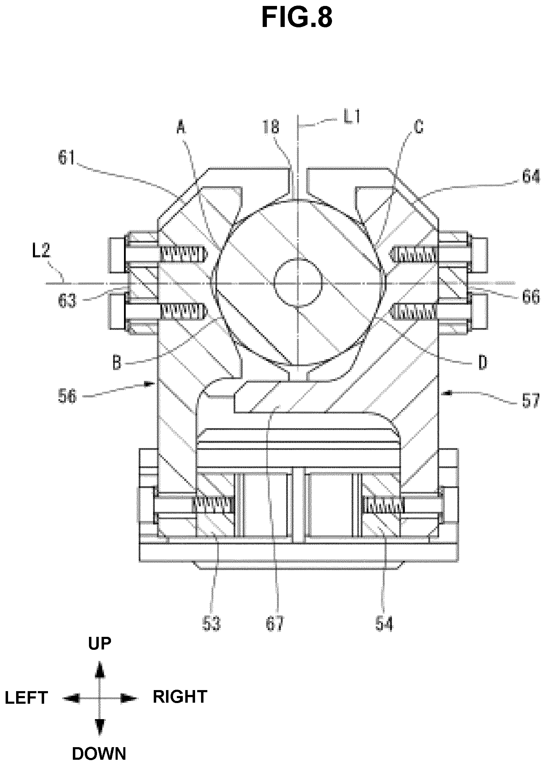

As shown in Fig. 8, in a state in which the first contact member 56 and the second contact member 57 move in the directions in which these move close to each other, the front-side contact pieces 61 and 64 of the first contact member 56 and the second contact member 57 contact the main shaft 18 at a plurality of positions apart in the circumferential direction of the main shaft 18.

More specifically, defining a direction in which the pair of actuators 53 and 54 are arranged as the left-right direction and a direction orthogonal to the left-right direction and the axial direction of the rotation shaft 14 as the upward-downward direction, the front-side contact pieces 61 and 64 are configured to contact the main shaft 18 at four pressing portions A to D apart in the upward-downward direction at the end portions in the left-right direction. The four pressing portions A to D are the front-side upper left pressing portion A, the front-side lower left pressing portion B, the front-side upper right pressing portion C, and the front-side lower right pressing portion D.

The front-side contact piece 64 of the second contact member 57 includes a projecting piece 67 extending up to a position overlapping the main shaft 18 in the above-described upward-downward direction. The projecting piece 67 forms a hang-down prevention portion that prevents the main shaft 18 from hanging down.

The projecting piece 67 is arranged at a position apart downward from the main shaft 18 by a predetermined interval. The reason why the interval is provided between the projecting piece 67 and the main shaft 18 is that the Oldham's function of the Oldham coupling 15 is prevented from being impaired.

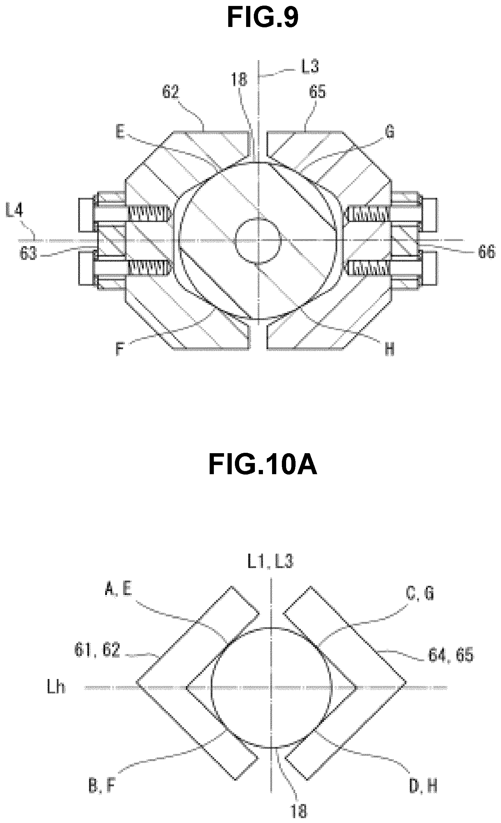

In a state in which the first contact member 56 and the second contact member 57 move in the directions in which these move close to each other, the rear-side contact pieces 62 and 65 of the first contact member 56 and the second contact member 57 contact the main shaft 18 at a plurality of positions apart in the circumferential direction of the main shaft 18, as shown in Fig. 9. More specifically, the rear-side contact pieces 62 and 65 contact the main shaft 18 at four pressing portions E to H apart in the left-right direction at the end portions in the upward-downward direction. The four pressing portions E to H are the rear-side upper left pressing portion E, the rear-side lower left pressing portion F, the rear-side upper right pressing portion G, and the rear-side lower right pressing portion H.

As described above, when the first contact member 56 and the second contact member 57 contact the main shaft 18 and press the main shaft 18 at the four points on the front side of the main shaft 18 and at four points on the rear side, movement in the direction orthogonal to the axial direction of the shaft member 16 is regulated.

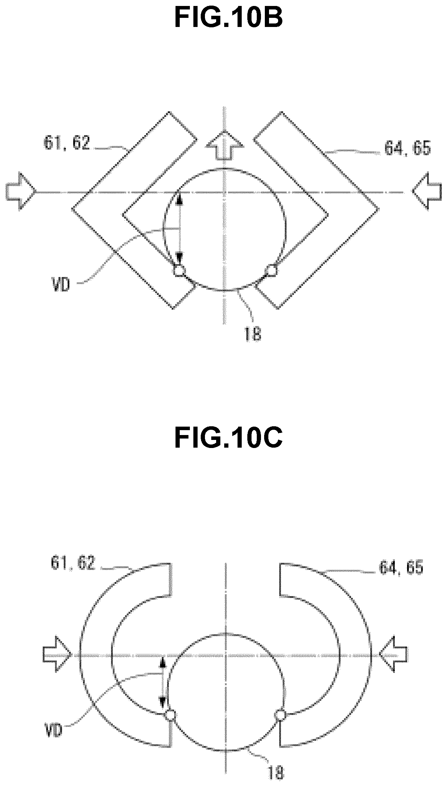

As shown in Figs. 10A, the front-side contact pieces 61 and 64 and the rear-side contact pieces 62 and 65 according to this embodiment are each formed into a concave shape opening toward the main shaft 18 when viewed from the axial direction of the main shaft 18. The concave shape here is a V shape shown in Figs. 10A and 10B or a U shape (semicircular shape) shown in Fig. 10C.

If each of the front-side contact pieces 61 and 64 and the rear-side contact pieces 62 and 65 is formed into the V shape, the following advantage can be obtained. In a case of the V shape, when the main shaft 18 is hanging down, and the contact pieces move toward the center, each portion indicated by a circle (see Fig. 10B) hits the main shaft 18, and the main shaft 18 moves toward the center. At this time, if the contact pieces have the V shape, the main shaft 18 readily returns to the upper side along the shape. A hang-down allowable amount VD is larger than in a case of the semicircular shape shown in Fig. 10C.

That is, the reason why the front-side contact pieces 61 and 64 and the rear-side contact pieces 62 and 65 are each formed into not a semicircular shape but a V shape is that the effect of returning the shaft member 16 that is hanging down to the original state is high. When the contact pieces are formed into the V shape, the force of returning the pressed shaft member 16 to the center can be made higher (than a circular shape) (even if the shaft member hangs down, it can be returned to the original state).

The above-described pressing portions A to H of the front-side contact pieces 61 and 64 and the rear-side contact pieces 62 and 65 are each formed by a tilting surface tilting with respect to a horizontal axis Lh when viewed from the front side, as shown in the configuration diagram of Fig. 10A. As shown in Figs. 8 and 9, the tilt angles of the pressing portions A to D of the front-side contact pieces 61 and 64 with respect to the horizontal are larger than those of the pressing portions E to H of the rear-side contact pieces 62 and 65.

In other words, the pressing portions A to H each tilt with respect to the horizontal, and the tilt angles are different between the front-side contact pieces 61 and 64 and the rear-side contact pieces 62 and 65.

Also, the positions (pressing portions A to D) where the front-side contact pieces 61 and 64 contact the main shaft 18 and the positions (pressing portions E to H) where the rear-side contact pieces 62 and 65 contact the main shaft 18 are different in the circumferential direction of the main shaft 18.

The front-side contact pieces 61 and 64 employ a structure that clamps a circle that is the outer periphery of the main shaft 18 as close to the outside as possible such that the main shaft 18 in a hang-down state can easily be picked up.

That is, the distance between the front-side upper left pressing portion A and the front-side lower left pressing portion B is shorter than the distance between the rear-side upper left pressing portion E and the rear-side lower left pressing portion F, and the distance between the front-side upper right pressing portion C and the front-side lower right pressing portion D is shorter than the distance between the rear-side upper right pressing portion G and the rear-side lower right pressing portion H. In other words, the front-side contact pieces 61 and 64 each have a contact point to the main shaft 18 at a position close to a horizontal axis L2 (see Fig. 8). The front-side contact piece 64 is provided with the projecting piece 67 to prevent the main shaft 18 from hanging down and falling.

The rear-side contact pieces 62 and 65 have a structure capable of firmly holding the main shaft 18. That is, the distance between the rear-side upper left pressing portion E and the rear-side lower left pressing portion F and the distance between the rear-side upper right pressing portion G and the rear-side lower right pressing portion H are longer than the distance between the pressing portions A and B and the distance between the pressing portions C and D. In other words, the rear-side contact pieces 62 and 65 each have a contact point to the main shaft 18 at a position close to a vertical axis L1.

The reason why the front-side contact pieces 61 and 64 and the rear-side contact pieces 62 and 65 have different shapes is that these members adjust the extent of the force of griping the main shaft 18. The rear-side contact pieces 62 and 65 are configured to firmly grip the main shaft 18 to perform centering of the main shaft 18. The front-side contact pieces 61 and 64 are configured to support swing as compared to the rear side. That is, the main function of the front-side contact pieces 61 and 64 is preventing hang-down, and the sub function is centering. The main function of the rear-side contact pieces 62 and 65 is centering, and the sub function is preventing hang-down.

In this embodiment, as shown in Fig. 8, the front-side upper left pressing portion A and the front-side upper right pressing portion C, and the front-side lower left pressing portion B and the front-side lower right pressing portion D are symmetric with respect to the vertical axis L1 extending in the upward-downward direction.

Also, the front-side upper left pressing portion A and the front-side lower left pressing portion B, and the front-side upper right pressing portion C and the front-side lower right pressing portion D are symmetric with respect to the horizontal axis L2.

Furthermore, as shown in Fig. 9, the rear-side upper left pressing portion E and the rear-side upper right pressing portion G, and the rear-side lower left pressing portion F and the rear-side lower right pressing portion H are symmetric with respect to a vertical axis L3 extending in the upward-downward direction.

Also, the rear-side upper left pressing portion E and the rear-side lower left pressing portion F, and the rear-side upper right pressing portion G and the rear-side lower right pressing portion H are symmetric with respect to a horizontal axis L4.

The first contact member 56 and the second contact member 57 are configured such that the shaft member 16 and the rotation shaft 14 are located on the same axis in a state in which the main shaft 18 is pressed, and movement in the direction orthogonal to the axial direction of the shaft member 16 is regulated. That is, when the first contact member 56 and the second contact member 57 are driven by the second driving device 52 to press the main shaft 18, axis alignment between the shaft member 16 and the rotation shaft 14 is performed. In this embodiment, since the main shaft 18 is pressed at two points in the axial direction by the front-side contact pieces 61 and 64 and the rear-side contact pieces 62 and 65, the axis of the shaft member 16 accurately matches the axis of the rotation shaft 14.

### (Explanation of Control Device)

To the driving control device 41, as shown in Fig. 6, a start switch 71 and the above-described position sensor 44, the laser sensor 46, the driving motor 2, the first solenoid valve 35, the second solenoid valve 55, the alarm device 72, and the like are coupled. Although not illustrated in detail, the start switch 71 is formed by a mechanical switch to be operated by the operator, another device that sends an electrical signal when operating the screw thread cleaning module 1, and the like. The alarm device 72 is formed by an alarm lamp, a speaker, and the like.

The driving control device 41 is formed using a microcomputer (not shown), and includes a screw thread cleaning operation control unit 73 that executes a predetermined program, and a tap detection unit 74. The screw thread cleaning operation control unit 73 includes a first function unit 75 to a fifth function unit 79 to execute a screw thread cleaning operation using the screw thread cleaning module 1. In the first function unit 75 to the fifth function unit 79, the first function unit 75 operates first, and after that, the second function unit 76 to the fifth function unit 79 sequentially operate.

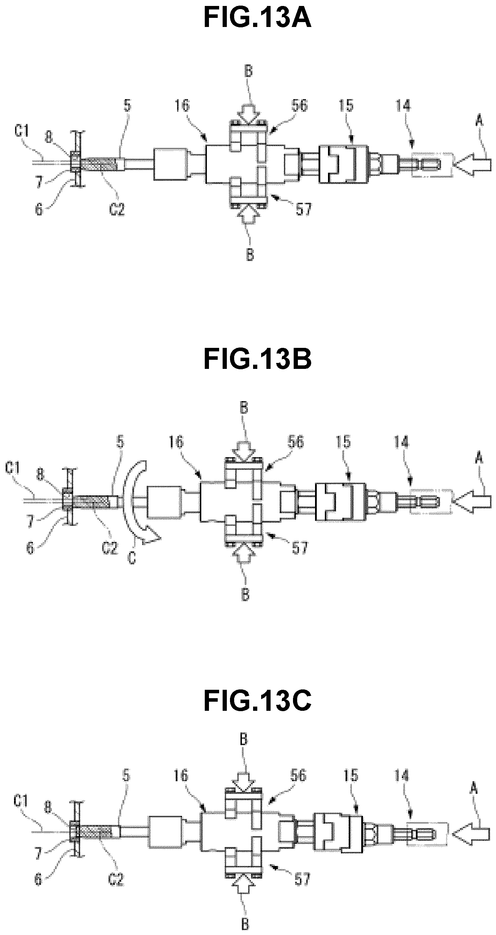

The screw thread cleaning operation by the screw thread cleaning module 1 is started from a state in which the screw thread cleaning module 1 is located at a predetermined initial position using the above-described positioning robot 42. The initial position here is a position where the distal end of the tap 5 contacts the opening edge of the threaded hole 8 of the workpiece 6, as shown in Fig. 13A. A work of locating the screw thread cleaning module 1 to the initial position is performed in a state in which the second driving device 52 is operated to press the main shaft 18 by the first contact member 56 and the second contact member 57, and axis alignment between the shaft member 16 and the rotation shaft 14 is performed. That is, the work of locating the screw thread cleaning module 1 to the initial position using the positioning robot 42 is performed based on the designed position of the tap 5 and the designed position of the threaded hole 8.

The parts of the screw thread cleaning module 1 and the workpiece 6 have tolerances. For this reason, in a state in which the screw thread cleaning module 1 is located at the initial position, the distal end of the tap 5 may not be in contact with the opening edge of the threaded hole 8, or the distal end of the tap 5 may be pressed against the threaded hole 8. Also, an axis C2 of the tap 5 may be decentered or tilted with respect to a center line C1 (see Fig. 4) of the threaded hole 8. The screw thread cleaning module 1 according to this embodiment is configured to perform the screw thread cleaning operation while eliminating a position deviation based on such tolerances, as will be described later.

The first function unit 75 of the driving control device 41 operates the second driving device 52 such that the first contact member 56 and the second contact member 57 press the main shaft 18. When locating the screw thread cleaning module 1 to the initial position, as described above, the first function unit 75 operates to perform axis alignment between the shaft member 16 and the rotation shaft 14.

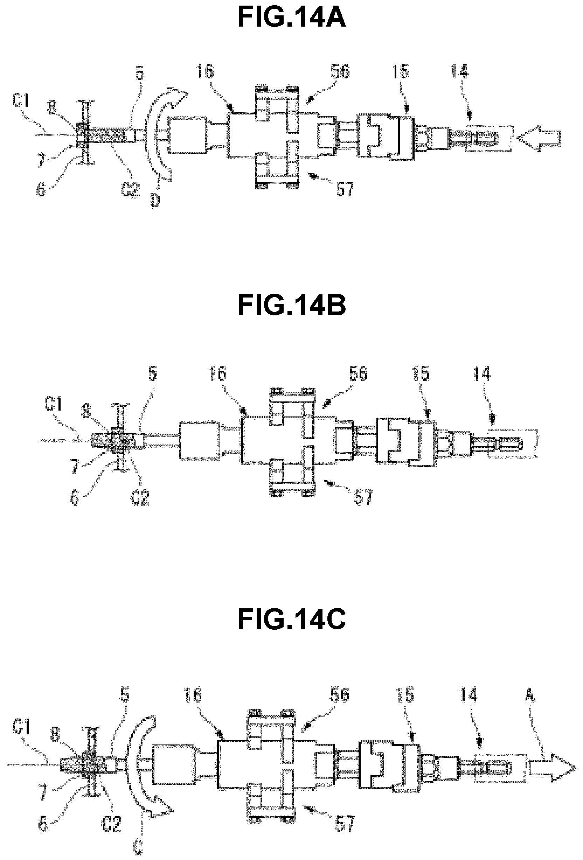

In a state in which the main shaft 18 is pressed by the first contact member 56 and the second contact member 57, the second function unit 76 operates the first driving device 25 such that the rod-shaped assembly 3 is moved by a predetermined driving force to the front side with respect to the support body 4 (such that the tap 5 moves close to the threaded hole 8). In Figs. 13A to 13C and 14, the direction of the driving force of moving the rod-shaped assembly 3 in the front-back direction is indicated by an arrow A. Also, the directions of the pressing forces of the first contact member 56 and the second contact member 57 pressing the main shaft 18 are indicated by an arrow B.

The first contact member 56 and the second contact member 57 are fixed to the support body 4 such that these cannot move in the axial direction (front-back direction) of the rod-shaped assembly 3. For this reason, when the rod-shaped assembly 3 moves forward with respect to the support body 4, the front-side contact pieces 61 and 64 and the rear-side contact pieces 62 and 65 of the first contact member 56 and the second contact member 57 slide on the outer peripheral surface of the main shaft 18 in a state in which these are in contact with the outer peripheral surface of the main shaft 18. Note that the first contact member 56 and the second contact member 57 may be configured to move integrally with the rod-shaped assembly 3 with respect to the support body 4.

On the other hand, if the distal end of the tap 5 is in contact with the opening edge of the threaded hole 8 in a state in which the screw thread cleaning module 1 is located at the initial position, the rod-shaped assembly 3 is not move forward, and the tap 5 presses the workpiece 6 by a predetermined pressing force. When the second function unit 76 operates in this way, as shown in Fig. 13A, the tap 5 is pressed against the workpiece 6 in which the tap 5 is in contact with the opening edge of the threaded hole 8. In Fig. 13A, the pressing forces are indicated by hollow arrows. Fig. 13A shows a state in which the axis C2 of the tap 5 deviates from the center line C1 of the threaded hole 8.

In a state in which the second function unit 76 operates, and the distal end portion of the tap 5 is in contact with the opening edge of the threaded hole 8 or the vicinity of the opening edge, the third function unit 77 operates the second driving device 52 such that the pressing forces of the first contact member 56 and the second contact member 57 disappear, and rotates the driving motor 2 in the reverse direction for a predetermined time. This state is shown Fig. 13B. In Fig. 13B, the rotation direction of the rotation shaft 14 at the time of reverse rotation is indicated by an arrow C. When the tap 5 rotates in the reverse direction, the distal end portion of the tap 5 enters the center of the threaded hole 8. Alignment is performed when moving the tap 5 close just before it hits the nut 7. However, proper centering (the work of aligning the taper of the tap 5with the nut 7) is performed by rotating the tap 5 in the reverse direction to cause the tap 5 fall into the center of the nut 7.

That is, if the axis C2 of the tap 5 is deviated or tilted with respect to the center line C1 of the threaded hole 8 in a state in which the screw thread cleaning module 1 is located at the initial position, the tap 5 rotates in the reverse direction and enters the threaded hole 8, as shown in Fig. 13C. At this time, the shaft member 16 tilts or translates with respect to the Oldham coupling 15 as the starting point such that the axis C2 of the tap 5 is located on the same axis as the center line C1 of the threaded hole 8.

The fourth function unit 78 rotates the driving motor 2, which has ended the reverse rotation, in the forward direction at a predetermined rotation speed, as shown in Fig. 14A, and operates the first driving device 25 such that the rod-shaped assembly 3 moves toward the workpiece 6 at a predetermined speed during the time the tap 5 is screwed into the nut 7. In Fig. 14A, the rotation direction of the rotation shaft 14 at the time of forward rotation is indicated by an arrow D. The speed of the rod-shaped assembly 3 moving toward the workpiece 6 is the speed of the tap 5 when it is driven and rotated in the forward direction by the driving motor 2 and screwed into the nut 7 and moved forward.

The pressing force of pressing the tap 5 in the forward direction is applied to the tap 5 by the first driving device 25 only for a predetermined time after the reverse rotation. However, after the set time elapses, the fourth function unit 78 controls the first driving device 25 such that the pressing force is lost, and the tap 5 is screwed into and thus freely moves forward by itself. Hence, at the time of screwing, the tap 5 is moved forward by a driving force generated by screwing the tap 5.

When the tap 5 is screwed into the threaded hole 8, the spatter adhered to the threaded hole 8 is removed and discharged to the outside of the threaded hole 8. The discharged spatter is blown off by air sent from the air blow pipe 48.

Also, as shown in Fig. 14B, the fourth function unit 78 stops the driving motor 2 and the first driving device 25 when the tap 5 is screwed into the nut 7 by a predetermined length. The stop period can be set based on the time when the position sensor 44 detects the first support plate 24.

After the tap 5 is screwed into the nut 7 by the predetermined length, the fifth function unit 79 rotates the driving motor 2 in the reverse direction until the time of the tap 5 completely coming out of the nut 7 elapses, as shown in Fig. 14C. The depth of the tap 5 entering the nut 7 can be set by changing the position where the position sensor 44 detects the first support plate 24.

The tap 5 thus rotates in the reverse direction and thus retreats and comes out of the nut 7. After that, the fifth function unit 79 operates the second driving device 52 in a state in which the tap 5 is off the threaded hole 8 to execute centering to the shaft member 16 and operates the first driving device 25 to return the screw thread cleaning module 1 to the initial position.

The tap detection unit 74 of the driving control device 41 detects the presence/absence of the tap 5 based on a signal sent from the laser sensor 46 after the end of the above-described screw thread cleaning operation. If the tap 5 is not detected, the driving control device 41 operates the alarm device 72.

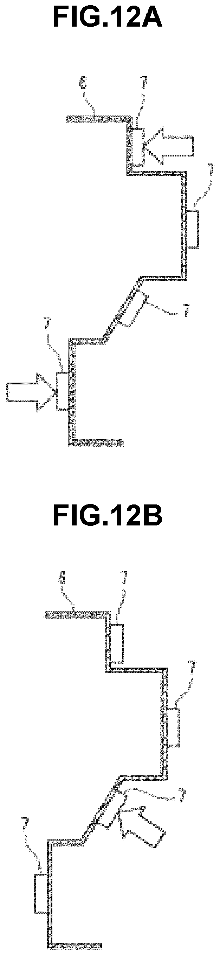

According to the screw thread cleaning module 1 of this embodiment, screw thread cleaning can be performed as shown in Figs. 12A to 12C. In Figs. 12A to 12C, directions in which screw thread cleaning is performed are indicated by hollow arrows.

Fig. 12A shows a screw thread cleaning operation in a case where screw thread cleaning is performed for each of the nuts 7 provided on the obverse and reverse sides of the workpiece 6. Since the screw thread cleaning module 1 includes a hang-down prevention mechanism formed by the first contact member 56 and the second contact member 57, and screw thread cleaning can be performed by the screw thread cleaning module 1 alone, screw thread cleaning can be performed from both the obverse and reverse sides of the workpiece 6, as shown in Fig. 12A.

Fig. 12B shows a screw thread cleaning operation in a case where there exist the nuts 7 with different attachment angles. Since the screw thread cleaning module 1 includes the attachment bracket 43, a restriction imposed by the attachment angle of the nut 7 is eliminated by exchanging the attachment bracket 43 with one suitable for the attachment angle of the nut 7.

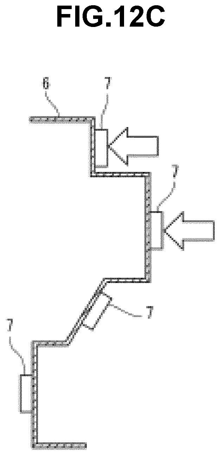

Fig. 12C shows a screw thread cleaning operation in a case where there exist the nuts 7 at different positions in the front-back direction. If, in a concave/convex shape like an automobile part, the depth of the attachment position is different between the nut 7 illustrated at the uppermost position in Fig. 12C and the nut 7 illustrated under that, screw thread cleaning can be implemented using the screw thread cleaning modules 1 in which the lengths of the main shafts 18 are different. That is, since the screw thread cleaning module 1 includes a hang-down prevention mechanism formed by the first contact member 56 and the second contact member 57, the long main shaft 18 can be used while preventing the main shaft 18 from hanging down.

### (Explanation of Effect of Screw thread cleaning Module According to This Embodiment)

In the thus configured screw thread cleaning module 1, the tap 5 can be positioned to the threaded hole 8 in a state in which the shaft member 16 located on the side of the tap 5 with respect to the Oldham coupling 15 is supported by the first contact member 56 and the second contact member 57. For this reason, even if the threaded hole 8 is directed in the horizontal direction, or even if the threaded hole 8 is directed, for example, upward, the tap 5 can correctly be positioned to the threaded hole 8. Since the screw thread cleaning operation is performed in a state in which the pressing forces of the first contact member 56 and the second contact member 57 disappear, the tap 5 is correctly screwed into the threaded hole 8.

Hence, according to this embodiment, it is possible to provide a screw thread cleaning module that is not restricted by a direction in which a threaded hole is directed.

The shaft member 16 according to this embodiment includes the main shaft 18 (cylindrical portion) that the first contact member 56 and the second contact member 57 come into contact with. The first contact member 56 and the second contact member 57 are formed by the first contact member 56 located on one side of the main shaft 18 in the radial direction and the second contact member 57 located on the other side in the radial direction. The first contact member 56 and the second contact member 57 include the front-side contact pieces 61 and 64 and the rear-side contact pieces 62 and 65, which come into contact with the main shaft 18 at a plurality of positions apart in the circumferential direction of the main shaft 18.

Since the first contact member 56 and the second contact member 57 are provided, even if the screw thread cleaning module accesses the workpiece 6 in the horizontal direction, it is possible to properly perform centering and then perform screw thread cleaning while preventing the distal end of the tap 5 from hanging down by the weight of its own.

Also, since the screw thread cleaning module 1 has an elongated shape, it can be installed in a narrow space and can cope with threaded holes whose distance therebetween is short or the nuts 7 provided on a concave/convex shape. Particularly, when a plurality of screw thread cleaning modules 1 are used, screw thread cleaning can be performed simultaneously for a plurality of nuts 7.

The front-side contact pieces 61 and 64 and the rear-side contact pieces 62 and 65 according to this embodiment are provided at positions apart in the axial direction of the shaft member 16. For this reason, since the main shaft 18 is pressed at two points in the axial direction by the front-side contact pieces 61 and 64 and the rear-side contact pieces 62 and 65, the axis of the shaft member 16 accurately matches the axis of the rotation shaft 14. Also, the positions where the front-side contact pieces 61 and 64 contact the main shaft 18 in the circumferential direction of the main shaft 18 and the positions where the rear-side contact pieces 62 and 65 contact the main shaft 18 in the circumferential direction of the main shaft 18 are different in the circumferential direction of the main shaft 18. For this reason, even if the circularity of the outer peripheral surface of the main shaft 18 is low, axis alignment between the shaft member 16 and the rotation shaft 14 can accurately be performed.

The driving control device 41 according to this embodiment includes the first function unit 75, the second function unit 76, the third function unit 77, and the fourth function unit 78. The first function unit 75 operates the second driving device 52 such that the first contact member 56 and the second contact member 57 press the shaft member 16.

The second function unit 76 operates the first driving device 25 such that the tap 5 moves close to the threaded hole 8 of the workpiece 6.

The third function unit 77 operates the second driving device 52 such that the pressing forces of the first contact member 56 and the second contact member 57 disappear, and also rotates the driving motor 2 in the reverse direction for a predetermined time.

The fourth function unit 78 rotates the driving motor 2, which has ended the reverse rotation, in the forward direction at a predetermined rotation speed, and operates the first driving device 25 such that the rod-shaped assembly 3 moves toward the workpiece 6 at a predetermined speed.

Hence, when the screw thread cleaning module 1 according to this embodiment is used, the screw thread cleaning work can be automated, and the screw thread cleaning work can efficiently be performed.

### (Explanation of Screw thread cleaning Unit)

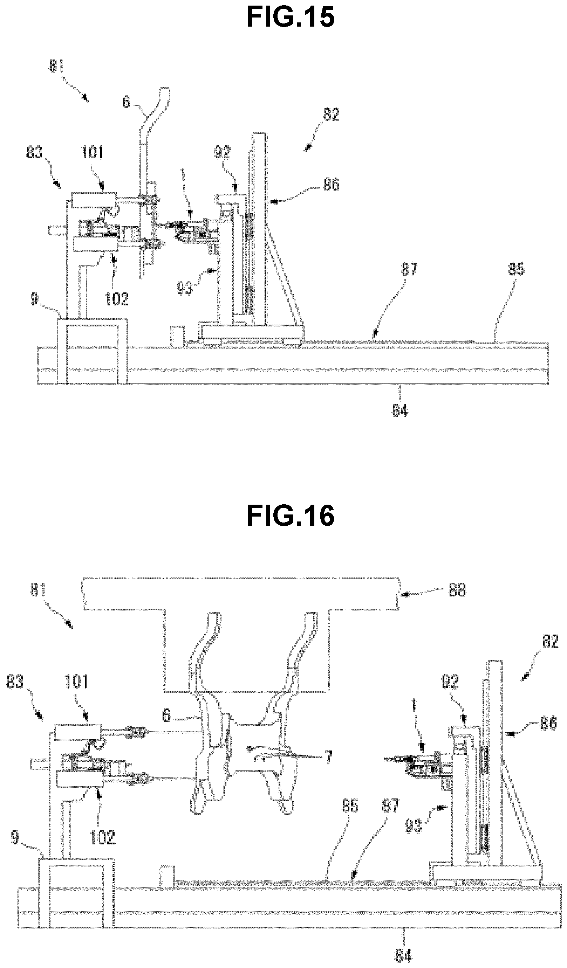

The above-described screw thread cleaning module 1 can be assembled to a screw thread cleaning unit 81 configured as shown in Figs. 15 to 22 and used.

As shown in Fig. 15, the screw thread cleaning unit 81 includes a screw thread cleaning module support unit 82 that supports the screw thread cleaning module 1 such that the axis of the rotation shaft 14 is horizontal, and a workpiece support unit 83 that supports the workpiece 6 upright such that the opening direction of the threaded hole 8 is the horizontal direction.

### (Explanation of Screw thread cleaning Module Support Unit)

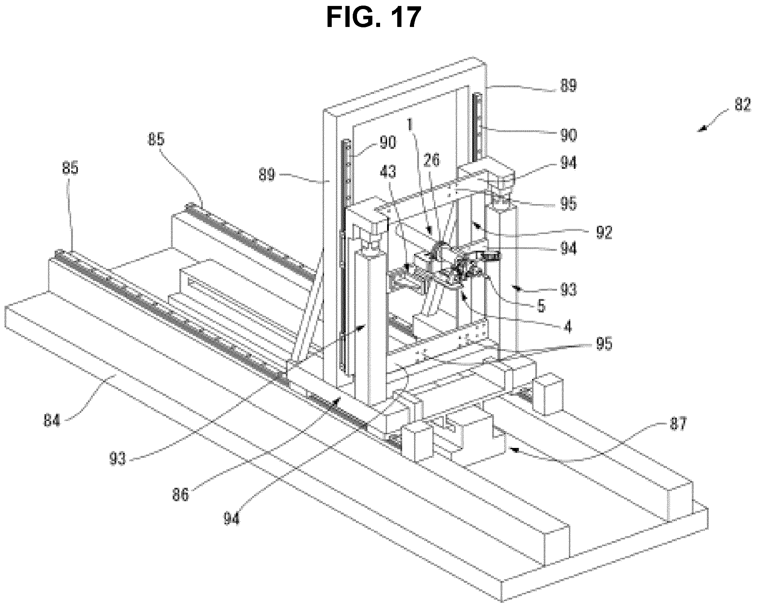

As shown in Fig. 15, the screw thread cleaning module support unit 82 includes a base 84 extending in the horizontal direction such that it is parallel to the axial direction of the rotation shaft 14 (the left-right direction in Fig. 15), and a slide member 86 configured to be movable along two first rails 85 provided on the base 84. On the base 84, a third driving device 87 (see Fig. 17) that moves the slide member 86 along the first rails 85 is provided. Although not illustrated in detail, the third driving device 87 employs a configuration that translates the slide member 86 using a pneumatic cylinder or a motor as a power source.

The slide member 86 is driven by the third driving device 87, thereby reciprocally moving between a screw thread cleaning position shown in Fig. 15 and a retreat position shown in Fig. 16. The screw thread cleaning position is the initial position when the screw thread cleaning module 1 executes the screw thread cleaning operation. The retreat position is a position where the screw thread cleaning module 1 does not contact the workpiece 6 when loading or unloading the workpiece 6 into or from the screw thread cleaning unit 81. The workpiece 6 is loaded into the screw thread cleaning unit 81 by a conveyance device 88, and after the screw thread cleaning work is ended, unloaded by the conveyance device 88. Note that the device that performs loading of the workpiece 6 and the device that performs unloading of the workpiece 6 can be the same or different.

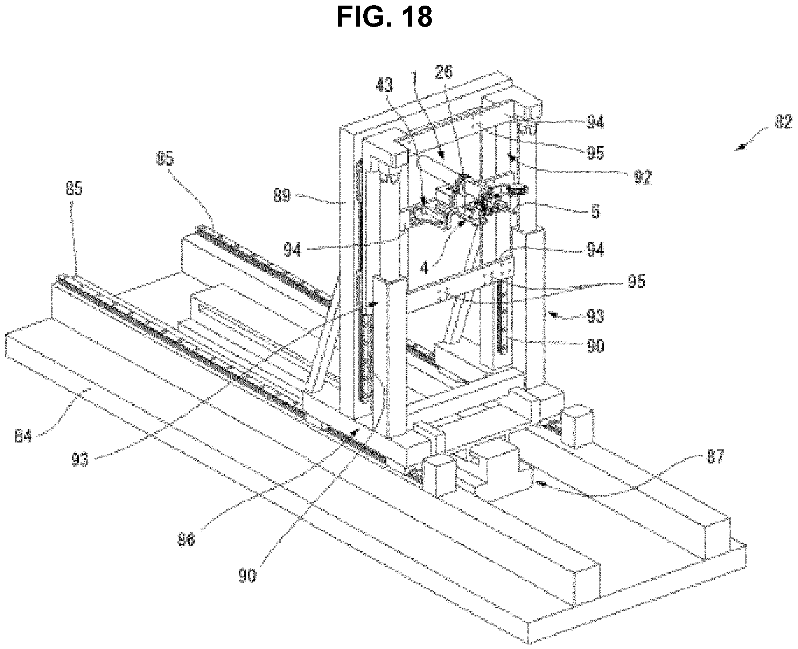

As shown in Fig. 17, the slide member 86 includes a pair of support columns 89 extending in the upward-downward direction, and two second rails 90 provided on the support columns 89. On the second rails 90, a frame 92 that supports the screw thread cleaning module 1 is attached to be movable in the upward-downward direction. Fourth driving devices 93 are coupled to the two end portions of the frame 92 in the horizontal direction. Each fourth driving device 93 is formed by an air cylinder extending in the upward-downward direction. The lower end portion of the fourth driving device 93 is attached to the slide member 86, and the upper end portion is attached to the frame 92. When the length of the fourth driving devices 93 in the upward-downward direction changes, the frame 92 moves in the upward-downward direction. Fig. 17 shows a state in which the frame 92 is located at the lowermost position. When the fourth driving devices 93 most extend, the frame 92 rises, as shown in Fig. 18.

When the frame 92 moves in the upward-downward direction in this way, the height of the screw thread cleaning module 1 supported by the frame 92 changes. For this reason, screw thread cleaning can be executed for, for example, each of the workpieces 6 that have various shapes like parts derived from a basic part and have the threaded holes 8 whose positions in the upward-downward direction are different. In addition, when the fourth driving devices 93 are controlled such that the frame 92 automatically moves up and down in accordance with the type of the workpiece 6 set in the workpiece support unit 83 to be described later, the height position of the threaded hole 8, and the like, the screw thread cleaning position is automatically switched and, therefore, the efficiency improves.

The frame 92 includes a plurality of support members 94 extending in the horizontal direction. In this embodiment, three support members 94 are provided in the frame 92. The support members 94 are located at a predetermined interval in the upward-downward direction, and located at the same position in the longitudinal direction of the first rails 85 (the axial direction of the rotation shaft 14). The support members 94 are provided with mounting seats 95 used to attach the support body 4 of the screw thread cleaning module 1. The mounting seats 95 are provided at a plurality of positions apart in the horizontal direction at a predetermined interval in each support member 94.

That is, the screw thread cleaning module support unit 82 has the plurality of mounting seats 95 at the same position in the axial direction of the rotation shaft 14. The plurality of mounting seats 95 move in the axial direction of the rotation shaft 14 when the third driving device 87 drives the slide member 86.

As shown in Fig. 17, the second support plate 26 of the screw thread cleaning module 1 is attached to the mounting seat 95 via the attachment bracket 43. When attaching the screw thread cleaning modules 1 to the plurality of mounting seats 95, the positions of the screw thread cleaning modules 1 are set such that the tap 5 of each screw thread cleaning module 1 faces a threaded hole 8 of the workpiece 6. The position setting is performed using the attachment bracket 43 that couples the second support plate 26 and the support member 94. That is, the attachment bracket 43 is individually formed, or a shim (not shown) is arranged at each end or one end portion of the attachment bracket 43, thereby changing the position of the screw thread cleaning module 1 in the upward-downward direction, the left-right direction, and the front-back direction and setting the position. When the position setting is done, each tap 5 faces a threaded hole 8, and all taps 5 have a predetermined distance to the threaded holes 8.

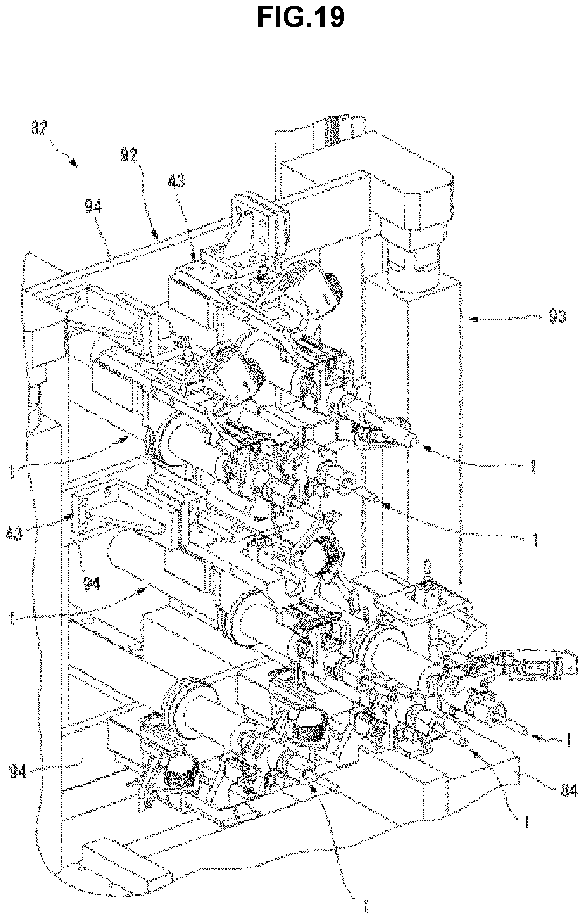

The base 84 of the screw thread cleaning module support unit 82 according to this embodiment is configured to stop the slide member 86 at a predetermined position in the process of moving the slide member 86 on the base 84 toward the workpiece 6. The predetermined position is a position at which the screw thread cleaning module 1 is positioned to the above-described initial position. Note that when attaching a plurality of screw thread cleaning modules 1 to the frame 92, the attachment angle of each screw thread cleaning module 1 needs to be changed to prevent interference between adjacent screw thread cleaning modules 1. The attachment angle is an angle in a direction in which the screw thread cleaning module 1 rotates about the axis of the rotation shaft 14. In this embodiment, as shown in Fig. 19, the attachment angle of the screw thread cleaning module 1 is changed using the attachment bracket. That is, the attachment direction of the attachment bracket 43 is set such that the screw thread cleaning module 1 is rotated by 90° and attached, or the shape of the bracket 43 is changed to change the attachment angle of the screw thread cleaning module 1.

When the plurality of screw thread cleaning modules 1 are set in the frame 92 such that these do not interfere with each other, screw thread cleaning can be performed simultaneously for a plurality of nuts 7 in a case where many nuts 7 are provided in one workpiece 6.

In a case where the plurality of nuts 7 are provided close to each other, if screw thread cleaning is performed for the nuts 7 using the individual screw thread cleaning modules 1, the screw thread cleaning modules 1 may interfere with each other. In this case, the screw thread cleaning modules 1 for the nuts 7 are set apart in the upward-downward direction in the frame 9. Screw thread cleaning of one nut 7 is executed by one screw thread cleaning module 1. After that, the frame 92 is moved in the upward-downward direction, and screw thread cleaning of another nut 7 is executed by another screw thread cleaning module 1.

Note that although not illustrated, the frame 92 can be configured to move in the horizontal direction (left-right direction) by providing a moving mechanism in the horizontal direction (left-right direction).

Fig. 19 shows an example in which seven screw thread cleaning modules 1 are attached to the frame 92. The plurality of screw thread cleaning modules 1 shown in Fig. 19 are arranged divisionally on the lower portion and the upper portion of the frame 92. The reason why the screw thread cleaning modules 1 are arranged in this way is that the screw thread cleaning work is performed for two types of workpieces 6 without performing an exchange work of the screw thread cleaning modules 1. For example, when performing the screw thread cleaning work for one workpiece 6 of the two types of workpieces 6, the frame 92 is lowered, and the screw thread cleaning work is performed in this state using the screw thread cleaning modules 1 arranged on the upper side. When performing the screw thread cleaning work for the other workpiece 6, the frame 92 is raised, and the screw thread cleaning work is performed in this state using the screw thread cleaning modules 1 arranged on the lower side.

### (Explanation of Workpiece Support Unit)

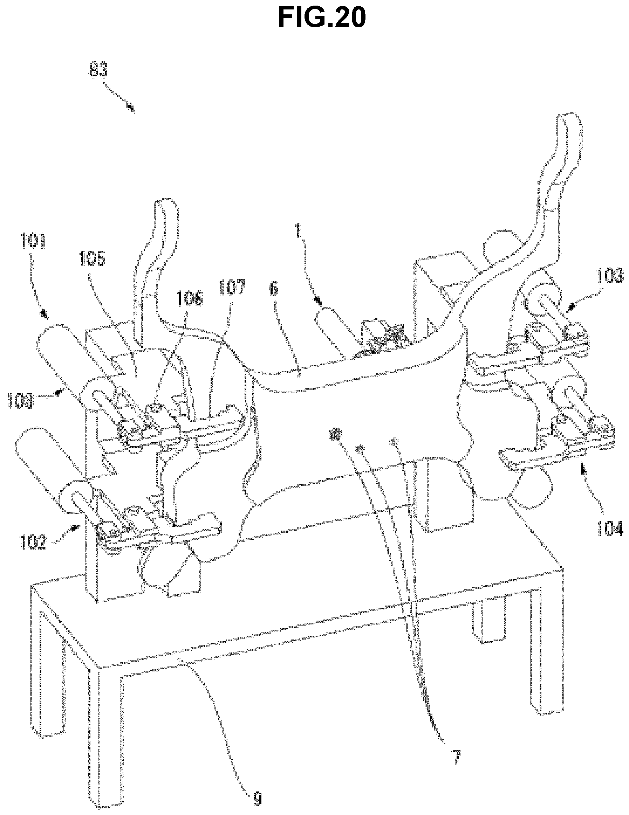

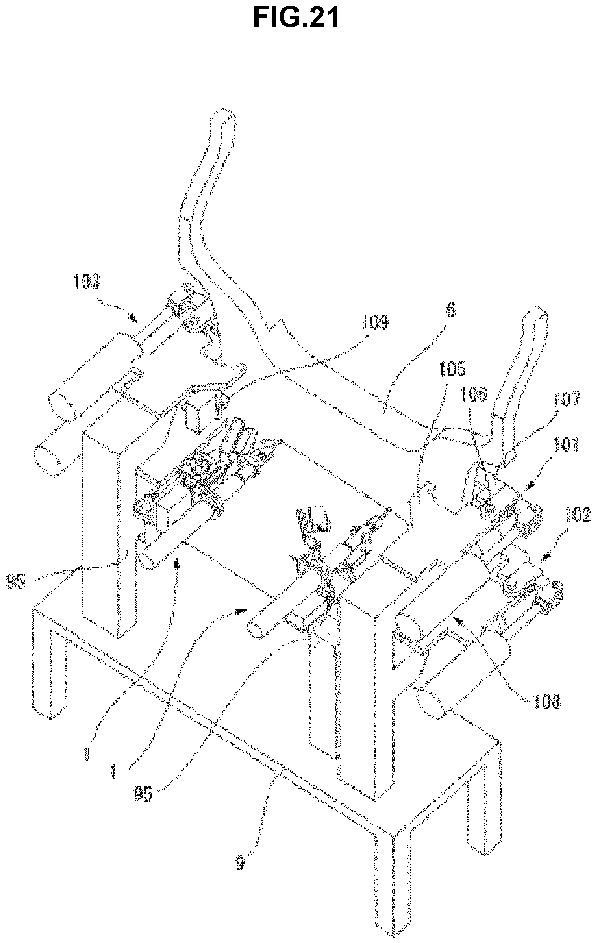

As shown in Figs. 20 and 21, the workpiece support unit 83 is configured to hold the workpiece 6 in upright state. The workpiece 6 shown in Figs. 20 and 21 is a vehicle body part of an automobile, which spreads in the horizontal direction in a use state. Note that the workpiece 6 shown in Figs. 20 and 21 is illustrated in a shape different from the actual shape such that the shape can easily be understood. The workpiece 6 has three nuts 7 welded to the front surface that appears in Fig. 20.

The workpiece support unit 83 according to this embodiment holds the workpiece 6 in an upright state using a plurality of workpiece holding devices (first to fourth workpiece holding devices 101 to 104). The first to fourth workpiece holding devices 101 to 104 have the same structure. Hence, the first workpiece holding device 101 located on the upper left side in Fig. 20 will be described here.

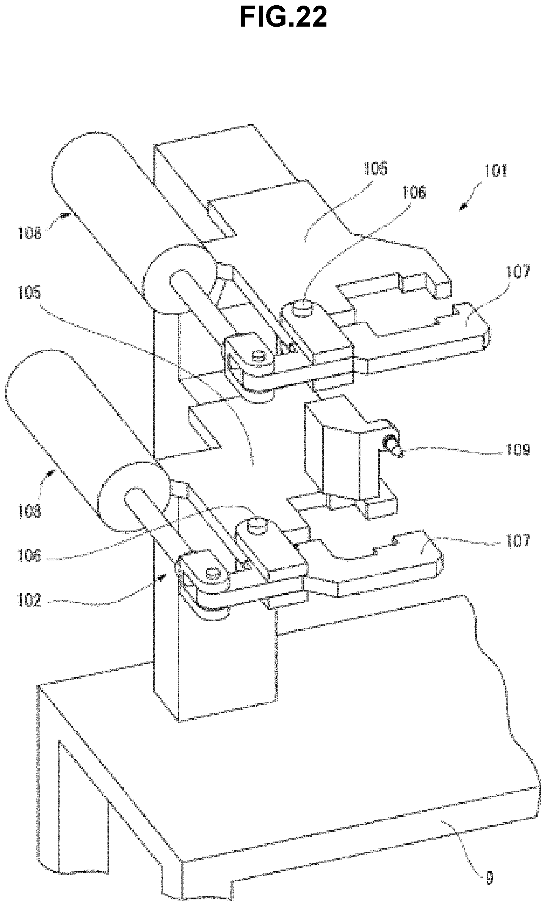

As shown in Fig. 22, the first to fourth workpiece holding devices 101 to 104 each employ a configuration in which the workpiece 6 is sandwiched by a fixed arm 105 fixed to the workpiece support table 9 and a movable arm 107 pivotally coupled to the fixed arm 105 via a support shaft 106. The movable arm 107 is coupled to an air cylinder 108 and driven by the air cylinder 108 to pivot between a workpiece release position where it is separated from the workpiece 6 and a workpiece holding position where it clamps the workpiece 6 in cooperation with the fixed arm 105.

Among the first to fourth workpiece holding devices 101 to 104, each of the fixed arms 105 of the second workpiece holding device 102 and the fourth workpiece holding device 104 located on the lower side is provided with a pin 109 configured to position the workpiece 6. As shown in Fig. 21, the pin 109 is fitted in a positioning hole (not shown) formed in the reverse surface of the workpiece 6.

To the workpiece support unit 83 according to this embodiment, as shown in Fig. 21, a plurality of screw thread cleaning modules 1 are assembled to perform the screw thread cleaning work from the reverse side of the workpiece 6. More specifically, the workpiece support unit 83 includes, at a plurality of portions located, across the workpiece 6, on the opposite side of the mounting seats 95 of the screw thread cleaning module support unit 82, the mounting seats 95 to which the support bodies 4 of the screw thread cleaning modules 1 are attached.

### (Explanation of Effect of Screw thread cleaning Unit According to This Embodiment)

The thus configured screw thread cleaning unit 81 includes the slide member 86 to which the plurality of screw thread cleaning modules 1 can be attached, and also includes the third driving device 87 that moves the slide member 86 in the axial direction of the rotation shaft 14. It is therefore possible to perform the screw thread cleaning work at once for a plurality of threaded holes 8 of one workpiece 6 using the plurality of screw thread cleaning modules 1. Hence, according to this embodiment it is possible to provide a screw thread cleaning unit capable of efficiently performing the screw thread cleaning work. The reason why this can be implemented is that the screw thread cleaning module 1 having an elongated shape and including a swing mechanism is used.

In the screw thread cleaning unit 81 according to this embodiment, the interval between the screw thread cleaning module 1 and the workpiece 6 can be increased by moving the slide member 86 to a position largely apart from the workpiece 6. It is therefore possible to avoid interference between the screw thread cleaning module 1 and a loading device that loads the workpiece 6 or an unloading device that unloads the workpiece 6.

The screw thread cleaning module support unit 82 according to this embodiment includes the slide member 86 that is driven by the third driving device 87. The plurality of mounting seats 95 are provided on one frame 92 that is supported by the slide member 86 to be movable in the upward-downward direction. The slide member 86 includes the fourth driving devices 93 that move the frame 92 in the upward-downward direction.

For this reason, since the plurality of screw thread cleaning modules 1 can be moved in the upward-downward direction and used, the screw thread cleaning work can be performed for, for example, a plurality of workpieces 6 without exchanging the screw thread cleaning module 1. It is therefore possible to provide a screw thread cleaning unit capable of more efficiently performing the screw thread cleaning work.

The workpiece support unit 83 according to this embodiment includes, at portions located, across the workpiece 6, on the opposite side of the mounting seats 95 of the screw thread cleaning module support unit 82, the mounting seats 95 to which the support bodies 4 of the screw thread cleaning modules 1 are attached. The screw thread cleaning module 1 (1) is an independent module including a swing mechanism and (2) enables access from the horizontal direction by the first contact member 56 and the second contact member 57 (hang-down prevention mechanism). The screw thread cleaning unit according to this embodiment can perform screw thread cleaning from both the obverse and reverse sides of the workpiece 6 by arranging the screw thread cleaning modules 1 on both the obverse and reverse sides of the workpiece 6. A conventional screw thread cleaning device cannot simultaneously perform screw thread cleaning at a plurality of points. Screw thread cleaning cannot be performed like the present invention only by simply increasing the number of robots or tap mechanisms described in patent literature 1 or patent literature 2.

### (Supplementary Note)

Features of the screw thread cleaning module and the screw thread cleaning unit according to the above-described embodiment are as follows.

### (Feature 1)

A screw thread cleaning module 1 according to the above-described embodiment comprises a rod-shaped assembly 3 including a driving motor 2 including a rotation shaft 14 having capable of rotating in a forward direction and a reverse direction in a horizontal posture, a shaft member 16 coupled to the rotation shaft 14 via an Oldham coupling 15, and a tap 5 that is detachably attached to a distal end portion of the shaft member 16 and can be screwed into a threaded hole 8 of a workpiece 6 (nut 7) when the rotation shaft 14 rotates in the forward direction, a support body 4 configured to support the rod-shaped assembly 3 such that the rod-shaped assembly can freely move in a horizontal axial direction of the rotation shaft 14, centering posture control means 58, supported by the support body 4 such that the centering posture control means is capable of coming into contact with and separating from an outer peripheral surface of the shaft member 16 of the rod-shaped assembly 3, and regulating movement of the shaft member 16 in a direction orthogonal to an axial direction of the shaft member 16 when pressed against the outer peripheral surface of the shaft member 16, and a driving control device 41 configured to rotate the rotation shaft 14 such that a rotation direction is reverse to that of the forward rotation, thereby actuating the Oldham coupling 15 and performing centering between the tap 5 and the threaded hole of the workpiece 6.

### (Feature 2)

In the screw thread cleaning module 1 described in (Feature 1), the shaft member 16 further includes a cylindrical portion (main shaft 18) that the centering posture control means 58 comes into contact with, and the centering posture control means 58 is formed by a first contact member 56 located on one side of the cylindrical portion in a radial direction and a second contact member 57 located on the other side in the radial direction, and the first contact member 56 and the second contact member 57 each includes contact pieces (61, 62, 64, and 65) that come into contact with the cylindrical portion at a plurality of positions apart in a circumferential direction of the cylindrical portion.

### (Feature 2-1)

In the screw thread cleaning module 1 described in (Feature 2), the contact pieces are formed by rear-side contact pieces 62 and 65 located on one end side in the axial direction and front-side contact pieces 61 and 64 located on the other end side in the axial direction.

### (Feature 2-2)

In the screw thread cleaning module 1 described in (Feature 2-1), positions where the front-side contact pieces 61 and 64 contact the cylindrical portion in the circumferential direction of the cylindrical portion and positions where the rear-side contact pieces 62 and 65 contact the cylindrical portion in the circumferential direction of the cylindrical portion are different.

### (Feature 3)

In the screw thread cleaning module 1 described in (Feature 2), the contact pieces are formed into a concave shape opening toward the cylindrical portion when viewed from the axial direction of the cylindrical portion.

### (Feature 4)

In the screw thread cleaning module 1 described in (Feature 2), the contact pieces include a hang-down prevention portion (projecting piece 67) configured to prevent the shaft member 16 from hanging down.

### (Feature 5)

In the screw thread cleaning module 1 described in one of (Feature 1) to (Feature 4), the screw thread cleaning module 1 further comprises a first driving device 25 configured to move the rod-shaped assembly 3 in the axial direction of the rotation shaft 14 with respect to the support body 4, and a second driving device 52 configured to switch between a state in which the centering posture control means 58 presses the shaft member 16 and a state in which a pressing force disappears, the driving control device 41 controls operations of the driving motor 2, the first driving device 25, and the second driving device 52, wherein the driving control device 41 comprises a first function unit 75 configured to operate the second driving device 52 such that the centering posture control means 58 presses the shaft member 16, a second function unit 76 configured to operate the first driving device 25 such that the tap 5 moves close to the threaded hole 8 of the workpiece 6, a third function unit 77 configured to operate the second driving device 52 such that the pressing force of the centering posture control means 58 disappears and rotate the driving motor 2 in the reverse direction at a predetermined rotation speed for a predetermined time, and a fourth function unit 78 configured to rotate the driving motor 2, which has ended the reverse rotation, in the forward direction at a predetermined rotation speed and operate the first driving device 25 such that the rod-shaped assembly 3 moves toward the workpiece 6 at a predetermined speed.

### (Feature 5-1)

In the screw thread cleaning module 1 described in (Feature 5), the screw thread cleaning module further comprises a laser sensor 46 configured to irradiate the tap 5 with a laser beam 47 and send detection data capable of specifying the presence/absence of reflected light to the driving control device 41, and the driving control device 41 comprises a tap detection unit 74 configured to detect the presence/absence of the tap 5 based on a signal sent from the laser sensor 46 after the end of a screw thread cleaning operation.

### (Feature 6)

In the screw thread cleaning module 1 described in one of (Feature 1) to (Feature 5), the screw thread cleaning module 1 further comprises a tap holder 19 configured to detachably attach the tap 5 to the distal end portion of the shaft member 16, wherein the tap holder 19 comprises a support shaft 21 attached to the shaft member 16 such that the support shaft 21 rotates integrally with the shaft member 16, and a lock nut 22 threadably attached to a distal end portion (front end portion 21b) of the support shaft 21, the distal end portion of the support shaft 21 is formed into a bifurcated shape capable of clamping the tap 5, and is formed into a tapered shape gradually thinning toward the distal end, and the lock nut 22 includes a tapered surface 22 fitted on the distal end portion of the support shaft 21.

### (Feature 7)

A screw thread cleaning unit 81 according to the above-described embodiment comprises a screw thread cleaning module support unit 82 configured to support a screw thread cleaning module 1 according to any one of (Feature 1) to (Feature 6) such that an axis of a rotation shaft 14 is horizontal, and a workpiece support unit 83 configured to support a workpiece 6 such that an opening direction of a threaded hole 8 is a horizontal direction, wherein the screw thread cleaning module support unit 82 includes mounting seats 95 to each of which a support body 4 of the screw thread cleaning module 1 is attached at the same position in an axial direction of the rotation shaft 14 and at a plurality of positions in a direction orthogonal to the axial direction of the rotation shaft 14, and comprises a third driving device 87 configured to move the plurality of mounting seats 95 in the axial direction of the rotation shaft 14.

### (Feature 8)

In the screw thread cleaning unit 81 described in (Feature 7), the screw thread cleaning module support unit 82 further comprises a slide member 86 that is driven by the third driving device 87, the plurality of mounting seats 95 are provided on one frame 92 that is supported by the slide member 86 to be movable in an upward-downward direction, and the slide member 86 comprises a fourth driving device 94 configured to move the frame 92 in the upward-downward direction.

### (Feature 9)

In the screw thread cleaning unit 81 described in (Feature 7) or (Feature 8), the workpiece support unit 83 includes, at portions located, across the workpiece 6, on an opposite side of the mounting seats 95 of the screw thread cleaning module support unit 82, mounting seats 95 to each of which the support body 4 of the screw thread cleaning module 1 is attached.

### Explanation of the Reference Numerals and Signs

1...screw thread cleaning module, 2...driving motor, 4... support body, 5...tap, 6...workpiece, 8...threaded hole, 14...rotation shaft, 15...Oldham coupling, 16...shaft member, 41...driving control device, 58...centering posture control means, 82...screw thread cleaning module support unit, 83...workpiece support unit, 87...third driving device, 95...mounting seat.

## Claims

1. A screw thread cleaning module comprising:
a rod-shaped assembly including
a driving motor including a rotation shaft having capable of rotating in a forward direction and a reverse direction in a horizontal posture,
a shaft member coupled to the rotation shaft via an Oldham coupling, and
a tap detachably attached to a distal end portion of the shaft member and capable of being screwed into a threaded hole of a workpiece when the rotation shaft rotates in the forward direction;
a support body configured to support the rod-shaped assembly such that the rod-shaped assembly can freely move in a horizontal axial direction of the rotation shaft;
centering posture control means supported by the support body such that the centering posture control means is capable of coming into contact with and separating from an outer peripheral surface of the shaft member of the rod-shaped assembly, and regulating movement of the shaft member in a direction orthogonal to an axial direction of the shaft member when pressed against the outer peripheral surface of the shaft member; and
a driving control device configured to rotate the rotation shaft such that a rotation direction is reverse to that of the forward rotation, thereby actuating the Oldham coupling and performing centering between the tap and the threaded hole of the workpiece.

2. The screw thread cleaning module according to claim 1, wherein
the shaft member further includes a cylindrical portion that the centering posture control means comes into contact with, and
the centering posture control means is formed by a first contact member located on one side of the cylindrical portion in a radial direction and a second contact member located on the other side in the radial direction, and
the first contact member and the second contact member each includes contact pieces that come into contact with the cylindrical portion at a plurality of positions apart in a circumferential direction of the cylindrical portion.

3. The screw thread cleaning module according to claim 2, wherein
the contact pieces are formed into a concave shape opening toward the cylindrical portion when viewed from the axial direction of the cylindrical portion.

4. The screw thread cleaning module according to claim 2, wherein
the contact pieces include a hang-down prevention portion configured to prevent the shaft member from hanging down.

5. The screw thread cleaning module according to any one of claims 1 to 4, further comprising:
a first driving device configured to move the rod-shaped assembly in the axial direction of the rotation shaft with respect to the support body; and
a second driving device configured to switch between a state in which the centering posture control means presses the shaft member and a state in which a pressing force disappears,
wherein the driving control device controls operations of the driving motor, the first driving device, and the second driving device, and
the driving control device comprises:
a first function unit configured to operate the second driving device such that the centering posture control means presses the shaft member;
a second function unit configured to operate the first driving device such that the tap moves close to the threaded hole of the workpiece;
a third function unit configured to operate the second driving device such that the pressing force of the centering posture control means disappears and rotate the driving motor in the reverse direction at a predetermined rotation speed for a predetermined time; and
a fourth function unit configured to rotate the driving motor, which has ended the reverse rotation, in the forward direction at a predetermined rotation speed and operate the first driving device such that the rod-shaped assembly moves toward the workpiece at a predetermined speed.

6. The screw thread cleaning module according to any one of claims 1 to 5, further comprising:
a tap holder configured to detachably attach the tap to the distal end portion of the shaft member,
wherein the tap holder comprises:
a support shaft attached to the shaft member such that the support shaft rotates integrally with the shaft member; and
a lock nut threadably attached to a distal end portion of the support shaft,
the distal end portion of the support shaft is formed into a bifurcated shape capable of clamping the tap, and is formed into a tapered shape gradually thinning toward the distal end, and
the lock nut includes a tapered surface fitted on the distal end portion of the support shaft.

7. A screw thread cleaning unit comprising:
a screw thread cleaning module support unit configured to support a screw thread cleaning module according to any one of claims 1 to 6 such that an axis of a rotation shaft is horizontal; and
a workpiece support unit configured to support a workpiece such that an opening direction of a threaded hole is a horizontal direction,
wherein the screw thread cleaning module support unit
includes mounting seats to each of which a support body of the screw thread cleaning module is attached at the same position in an axial direction of the rotation shaft and at a plurality of positions in a direction orthogonal to the axial direction of the rotation shaft, and comprises a third driving device configured to move the plurality of mounting seats in the axial direction of the rotation shaft.

8. The screw thread cleaning unit according to claim 7, wherein
the screw thread cleaning module support unit further comprises a slide member that is driven by the third driving device,
the plurality of mounting seats are provided on one frame that is supported by the slide member to be movable in an upward-downward direction, and
the slide member comprises a fourth driving device configured to move the frame in the upward-downward direction.

9. The screw thread cleaning unit according to claim 7 or 8, wherein
the workpiece support unit includes, at portions located, across the workpiece, on an opposite side of the mounting seats of the screw thread cleaning module support unit, mounting seats to each of which the support body of the screw thread cleaning module is attached.
